# EUROPEAN PATENT SPECIFICATION

(11) **EP 1 335 512 B1**
(45) Date of publication and mention of the grant of the patent: **28.02.2007**
(21) Application number: 03002177.8
(22) Date of filing: 03.02.2003
(51) Int. Cl.: H04H 1/00, H04L 27/34, H04B 7/185

(54) **Preprocessing of the superimposed signals in a layered modulation digital transmission scheme to use legacy receivers**
Signalvorverarbeitung der überlagerten Signale in einem digitalen Modulationsschema mit überlagerten Signalen zur Verwendung von bestehenden Empfängern
Prétraitement des signaux superposés dans un système de modulation digitale à signaux superposés afin d'utiliser des récepteurs existants

(30) Priority: 05.02.2002 US 68039
(43) Date of publication of application: 13.08.2003
(73) Proprietor: Hughes Electronics Corporation, El Segundo, California 90245-0956 (US)
(72) Inventor: Chen, Ernest C., San Pedro, California 90732 (US); Furuya, Tittany S., Los Angeles, Califonia 90066 (US); Hilmes, Philip S., Santa Monica, California 90405 (US); Santoru, Joseph, Agoura Hills, California 91301 (US)
(74) Representative: Grünecker, Kinkeldey, Stockmair & Schwanhäusser Anwaltssozietät

(56) References cited:
- EP-A- 0 356 096
- US-A- 5 430 770
- US-A- 5 966 412
- MAZZINI G: "Power division multiple access" UNIVERSAL PERSONAL COMMUNICATIONS, 1998. ICUPC '98. IEEE 1998 INTERNATIONAL CONFERENCE ON FLORENCE, ITALY 5-9 OCT. 1998, NEW YORK, NY, USA,IEEE, US, 5 October 1998 (1998-10-05), pages 543-546, XP010314962 ISBN: 0-7803-5106-1
- SALEH A A M ET AL: "ADAPTIVE LINEARIZATION OF POWER AMPLIFIERS IN DIGITAL RADIO SYSTEMS" BELL SYSTEM TECHNICAL JOURNAL, AMERICAN TELEPHONE AND TELEGRAPH CO. NEW YORK, US, vol. 62, no. 4, PART 1, 1 April 1983 (1983-04-01), pages 1019-1033, XP002028354
- KANNAN RAMCHANDRAN: "MULTIRESOLUTION BROADCAST FOR DIGITAL HDTV USING JOINT SOURCE/ CHANNEL CODING" IEEE JOURNAL ON SELECTED AREAS IN COMMUNICATIONS, IEEE INC. NEW YORK, US, vol. 11, no. 1, 1993, pages 6-22, XP000377993 ISSN: 0733-8716
- TIMOTHY PRATT, CHARLES W. BOSTIAN: "Satellite Communications" 1986 , JOHN WILEY & SONS , NEW YORK XP002248387 * page 408, paragraph 3 *
- JANSSEN G.J.M.; SLIMANE S.B.: 'Performance of a multiuser detector for M-PSK signals based on successive cancellation' CC 2001. 2001 IEEE INTERNATIONAL CONFERENCE ON COMMUNICATIONS 11 June 2001, XP010552960
- SLIMANE S.B.; JANSSEEN G.J.M.: 'Power optimization of M-PSK cochannel signals for a narrowband multiuser detector' 2001 IEEE PACIFIC RIM CONFERENCE ON COMMUNICATIONS, COMPUTERS AND SIGNAL PROCESSING 26 August 2001, XP010560334
- SOONG A.C.K.; KRZYMIEN W.A.: 'Performance of a reference symbol assisted multistage successive interference cancelling receiver in a multi-cell CDMA wireless system' CONFERENCE RECORD. COMMUNICATION THEORY MINI-CONFERENCE, GLOBECOM '95., IEEE SINGAPORE 13 November 1995, XP010159490
- ARSLAN H.; MOLNAR K.: 'Iterative co-channel interference cancellation in narrowband mobile radio systems' EMERGING TECHNOLOGIES SYMPOSIUM: BROADBAND, WIRELESS INTERNET ACCESS, 2000 IEEE 10 April 2000, XP010538900
- MEYR ET AL: 'Digital Communication Receivers, pp. 610-612', 1998, JOHN WILEY AND SONS XP002364876

## Description

### BACKGROUND OF THE INVENTION

### 1. Field of the Invention.

The present invention relates generally to systems for receiving digital signals, and in particular, to systems for receiving layered modulation in digital signals.

### 2. Description of the Related Art.

As various digital signal communication systems and services evolve, there is a burgeoning demand for increased data throughput and added services. However, it is more difficult to implement improvements in old systems and new services when it is necessary to replace existing legacy hardware, such as transmitters and receivers. New systems and services are advantaged when they can utilize existing legacy hardware. In the realm of wireless communications, this principle is further highlighted by the limited availability of electromagnetic spectrum. Thus, it is not possible (or at least not practical) to merely transmit enhanced or additional data at a new frequency.

The conventional method of increasing spectral capacity is to move to a higher-order modulation, such as from quadrature phase shift keying (QPSK) to eight phase shift keying (8PSK) or sixteen quadrature amplitude modulation (16QAM). Unfortunately, QPSK receivers cannot demodulate 8PSK or 16QAM signals. As a result, legacy customers with QPSK receivers must upgrade their receivers in order to continue to receive any signals transmitted with an 8PSK or 16QAM modulation.

Layered modulation enables systems and methods of transmitting signals to accommodate enhanced and increased data throughput without requiring additional frequency bands. Systems using layered modulation can provide enhanced and increased throughput signals for new receivers while remaining compatible with legacy receivers. Newer layered modulation techniques (such as detailed in United States Patent Application No. 09/844,401, filed April 27, 2001, and entitled "LAYERED MODULATION FOR DIGITAL SIGNALS) also provide the unique advantage of allowing transmission signals to be upgraded from a source separate from the legacy transmitter. In other words, the layered signals can be asynchronous and/or non-coherent.

Related receiver systems for layered signals have also been described, such as those found in United States Patent No. 4,039,961. However, such receiver systems are based on analog circuits, synchronized by a voltage control oscillator. In addition, such receiver systems are limited because they are designed to only receive coherent layered signals, i.e. signals that are synchronously produced.
Mazzini, G. "Power Division Multiple Access", Universal Personal Communications, 1998, discloses a multiple access scheme in which channels transmitted in the same frequency band are regarded as interference. Such co-channel interference is discriminated using a power-diversity while the desired channel is discriminated by successively discriminating undesired co-channels of higher power. However, this publication does not teach any means for correcting for transmission errors or non-linearities, or the remodulation of any signals.
U.S. Patent 5,430,770, issued to Abbey on July 4, 1995, discloses a method and apparatus for composite signal separation and PSK/AM/FM demodulation. A receiver utilizes N demodulators cascadely coupled, where N is equal to or greater than the number of co-channel signals or perceived interference. The receiver first tracks to a predominant (stronger) signal, and regeneratively improves track on the other (weaker) signals by subtracting predominant the noise portion from the input of further demodulation stages. However, the '770 patent does not teach any means for correcting for transmission errors or non-linearities, or the remodulation of any signals.
European Patent Application EP0356096A2 discloses a signal receiving system for receiving messages from each of several unequal amplitude FM carriers occupying the same portion of the frequency band. The capture effect associated with conventional frequency demodulators is utilized in a series of successively coupled phase lock loops (PLL1, PLL2, PLL3,..., PLLN) to provide demodulation of all of several FM carrier signals including weaker carrier signals in the presence of dominant carrier signals. As is true with the previously identified publications, this publication does not teach any means for correcting transmission errors or non-linearities, nor the remodulation of any signals.
In the paper of Arslan H and Molnar K, 'Iterative co-channel interface cancellation in narrowband mobile radio systems', Emerging Technologies Symposium: Broadband, Wireless Internet Access, 2000 IEEE April 10-11, 2000, Piscataway, NJ, USA, XP010538900, co-channel interference cancellation using iterative subtraction is proposed for narrow-band QPSK systems. A successive cancellation receiver is disclosed with signal remodulation and signal projection of the decoded stronger signal before subtraction from the received baseband signal.

Accommodating legacy receivers is also an important consideration when layered modulation is employed to enhance a preexisting system. Although proper design of the layered modulation signal can enable legacy receivers to receive legacy layers of the signal, the new signal layers will not be accessible by legacy receivers. In addition, it may not always be possible (or preferable) to accommodate the legacy receivers in designing the new layered modulation signal. In which case, the legacy receivers would be rendered incompatible with the new layered modulation signal.

There is a need for systems and methods for receiving and processing the layered modulation signals. There is also a need for systems and methods to enable legacy receivers to receive all layers of the layered signal. There is further a need for systems and methods which enable legacy receivers to be operable if the layered modulation signal is otherwise incompatible with the legacy receiver. Finally, there is a need for systems and method for receiving layered signals subject to distortion. The present invention meets these needs.

### SUMMARY OF THE INVENTION

The present invention provides a flexible and expandable apparatus that can be implemented with high speed logic circuit technology capable of performing demodulator functions and processing of received layered modulation signals in real-time. The invention utilizes high speed digitization of the incoming signal to prepare it for further high-speed digital processing. The invention enables a receive system architecture wherein the incoming signal is split and separately directed to distinct integrated receiver/decoders (IRDs). The system facilitates compatibility with legacy IRDs. One legacy IRD can be used to receive the upper modulation layer as it would receive a conventional unlayered signal. In this IRD the lower modulation layer is ignored as noise. A second legacy IRD receives a signal that has been preprocessed to extract and convert the lower modulation signal to a legacy IRD compatible signal.

An exemplary apparatus comprises a tuner for receiving a layered signal and producing a layered in-phase signal and a layered quadrature signal therefrom, an analog-to-digital converter for digitizing the layered in-phase signal and the layered quadrature signal, a processor for decoding the layered in-phase signal and the layered quadrature signal to produce a single layer in-phase signal and a single layer quadrature signal, a digital-to-analog encoder for converting the single layer in-phase signal and the single layer quadrature signal to a single layer in-phase analog signal and a single layer quadrature analog signal and a modulator for modulating the single layer in-phase analog signal and the single layer quadrature analog signal to produce a single layer signal.

Preferably, the layered signal is designed to be compatible with a legacy receiver such that at least one signal layer is decodeable directly from the layered signal with the legacy receiver. The apparatus produces a single layer signal that is also decodeable with a legacy receiver.

To facilitate high speed signal processing, the processor can comprise a logic circuit. Decoding by the processor can start with match filtering the layered in-phase signal and the layered quadrature signal.

In one embodiment, the processor demodulates and decodes an upper layer signal from the layered in-phase signal and the layered quadrature signal. The processor further produces an ideal noise free upper layer signal including an ideal in-phase upper layer signal and an ideal quadrature upper layer signal from the decoded upper layer signal and subtracts the ideal in-phase upper layer signal and the ideal quadrature upper layer signal from the layered in-phase signal and the layered quadrature signal, respectively, to produce the single lower layer in-phase signal and the single lower layer quadrature signal. In a further embodiment, the layered in-phase signal and the layered quadrature signal are delayed to synchronize the subtraction.

In other embodiments, producing the ideal upper layer signal comprises signal processing the ideal in-phase upper layer signal and the ideal quadrature upper layer signal. Signal processing the ideal upper layer can include many elements, including pulse shaping the ideal in-phase upper layer signal and the ideal quadrature upper layer signal. Signal mapping to account for transmission distortions of the layered analog signal can also be applied to the ideal in-phase upper layer signal and the ideal quadrature upper layer signal. The ideal upper layer signal can also be processed by amplitude and phase matching with the layered signal to improve signal subtraction results.

### BRIEF DESCRIPTION OF THE DRAWINGS

Referring now to the drawings in which like reference numbers represent corresponding parts throughout:

FIGS. 1A - 1C illustrate the relationship of signal layers in a layered modulation transmission;

FIGS. 2A - 2C illustrate a signal constellation of a second transmission layer over a first transmission layer non-coherently;

FIG. 3 is a block diagram for a typical transmission system for a receiver of the invention;

FIG. 4 is a block diagram of a receiving architecture of the invention;

FIG. 5 is a block diagram of a layered modulation decoder of the invention; and

FIG. 6 is a method of a layered modulation decoding according to the invention.

### DETAILED DESCRIPTION OF PREFERRED EMBODIMENTS

In the following description, reference is made to the accompanying drawings which form a part hereof, and which show, by way of illustration, several embodiments of the present invention. It is understood that other embodiments may be utilized and structural changes may be made without departing from the scope of the present invention.

### 1. OVERVIEW

The present invention provides for the reception of non-coherent legacy layered modulation signals using legacy receivers. The signal layers can be independently modulated and coded. Signal layers which are otherwise incompatible with the legacy receiver are preprocessed in a layered modulation decoder to convert them to a compatible format. Thus, all layers of the layered modulation signal can be received by splitting the incoming signal and directing it to different legacy receivers, preprocessing as necessary to extract the desired layer and present it in a compatible format. Preferably, at least one layer of the signal is compatible with a legacy receiver without being preprocessed.

### 2. LAYERED SIGNALS

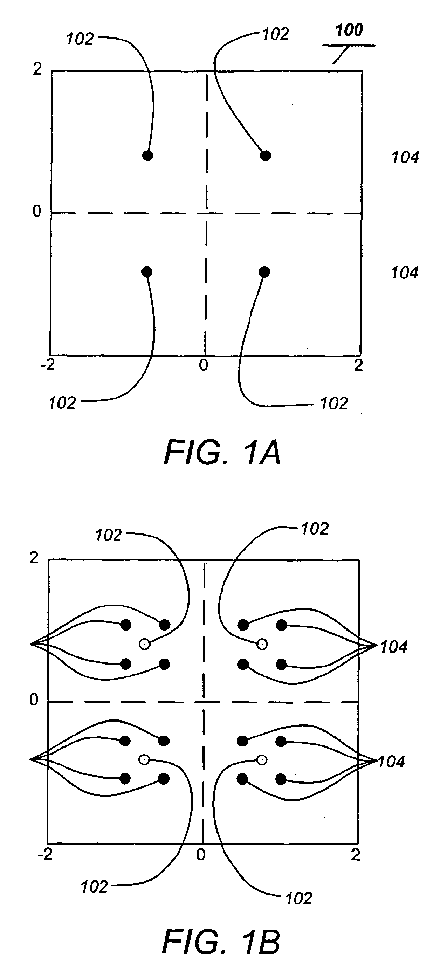

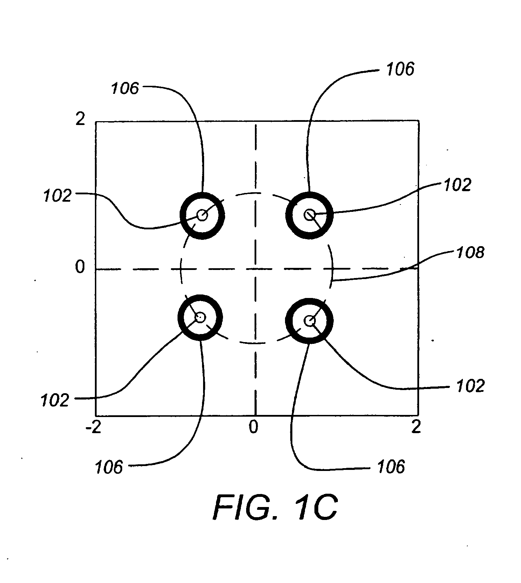

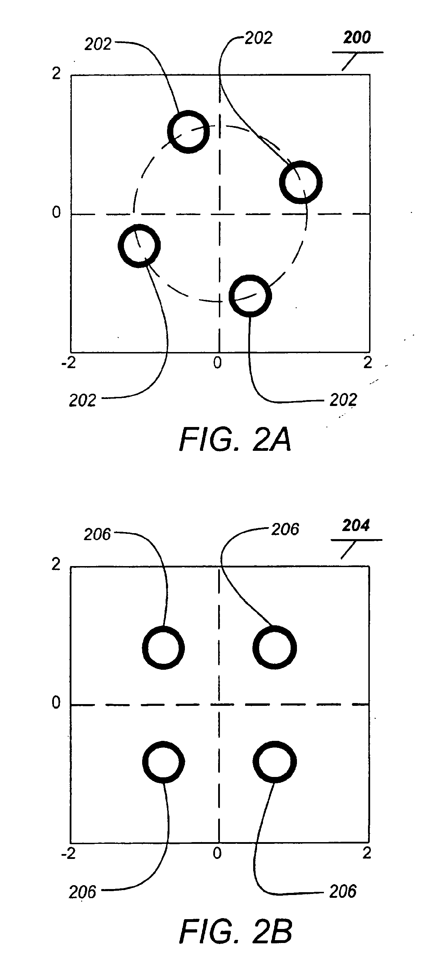

FIGS. 1A - 1C and FIGS. 2A - 2C illustrate and QPSK signal format in a two-layer example. FIGS. 1A - 1C illustrate the basic relationship of signal layers in a layered modulation transmission. FIG. 1A illustrates a upper layer signal constellation 100 of a transmission signal showing the signal points or symbols 102. FIG. 1B illustrates the lower layer signal constellation of symbols 104 over the upper layer signal constellation 100 where the layers are coherent. FIG. 1C illustrates a lower signal layer 106 of a lower transmission layer over the upper layer constellation where the layers may be non-coherent. The lower layer 106 rotates about the upper layer constellation 102 due to the relative modulating frequencies of the two layers in a non-coherent transmission. Both the upper and lower layers rotate about the origin due to the upper layer modulation frequency as described by path 108.

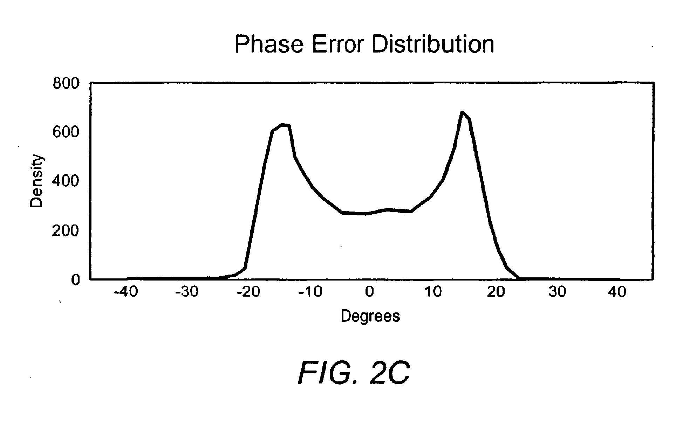

FIGS. 2A - 2C illustrate a signal constellation of a lower transmission layer over the upper transmission layer after upper layer demodulation. FIG. 2A shows the constellation 200 before the upper carrier recovery loop (CRL) and FIG. 2B shows the constellation 200 after CRL. In this case, the signal points of the lower layer are rings 202. FIG. 2C depicts a phase distribution of the received signal with respect to nodes 102. As mentioned above, relative modulating frequencies cause the lower layer constellation to rotate around the nodes of the upper layer constellation. After the lower layer CRL this rotation is eliminated. The radius of the lower layer constellation is determined by its power level. The thickness of the rings 202 is determined by the carrier to noise ratio (CNR) of the lower layer.

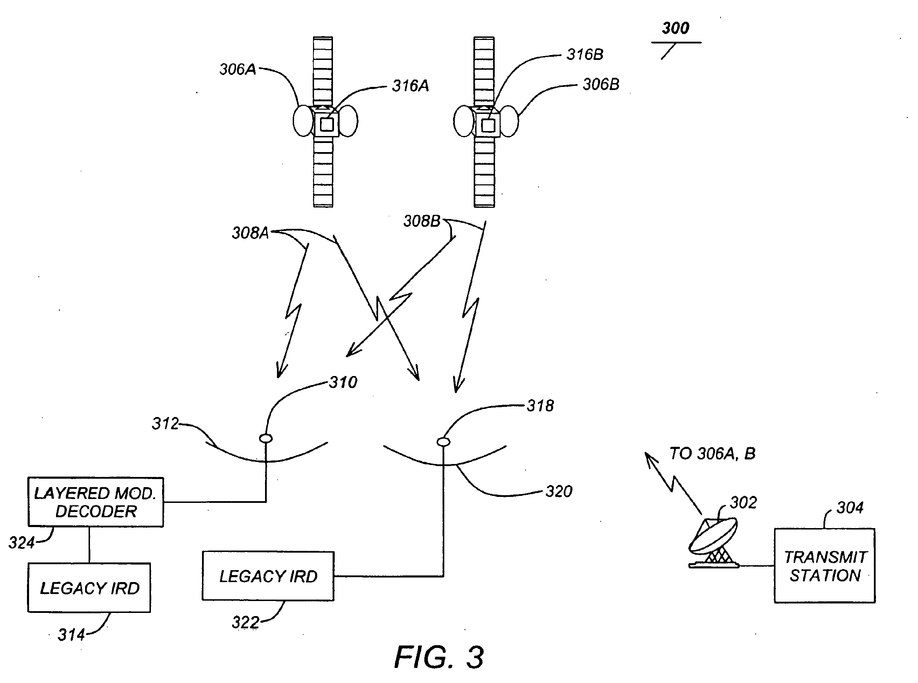

FIG. 3 is a block diagram for a typical system 300 of transmitting and receiving layered signals. Separate transmitters 316A, 316B, as may be located on any suitable platform, such as satellites 306A, 306B, are used to non-coherently transmit different layers of a signal of the present invention. It is noted that the transmitters may also be positioned on the same platform. Uplink signals are typically transmitted to each satellite 306A, 306B from one or more transmit stations 304 via an antenna 302. The layered signals 308A, 308B (downlink signals) are received at receiver antennas 312, 320 (which can alternately be a single antenna), such as satellite dishes, each with a low noise block (LNB) 310, 318 (which can likewise be a single LNB) where they are then coupled to legacy integrated receiver/decoders (IRDs) 322. One of the layered signals 308A can be distinguished and processed directly by the legacy IRD 322. Note that one satellite dish with one LNB can also be used to receive both the upper and lower layers.

With the invention, one legacy IRD 314 has the received layered signals 308A, 308B preprocessed in the layered modulation decoder 324 to separate and convert one of the layered signals 308B to a format compatible with the legacy IRDs 314, 322. It should be noted that antennas 312, 320 can each comprise more than one directional receiving dish to receive layered signals 308A, 308B from separate satellites as will be detailed in the receiver system described hereafter.

In addition, because the signal layers may be transmitted non-coherently, separate transmission layers may be added at any time using different satellites 306A, 306B or other suitable platforms, such as ground based or high altitude platforms. Thus, any composite signal, including new additional signal layers will be backwards compatible with legacy receivers which will disregard the new signal layers. To ensure that the signals are distinguishable, the combined signal and noise level for the lower layer must be at or below the allowed noise floor for the upper layer. Alternate receiver systems employing the invention described here can be constructed to decode signals having more than two signal layers.

### 3. RECEIVER SYSTEM

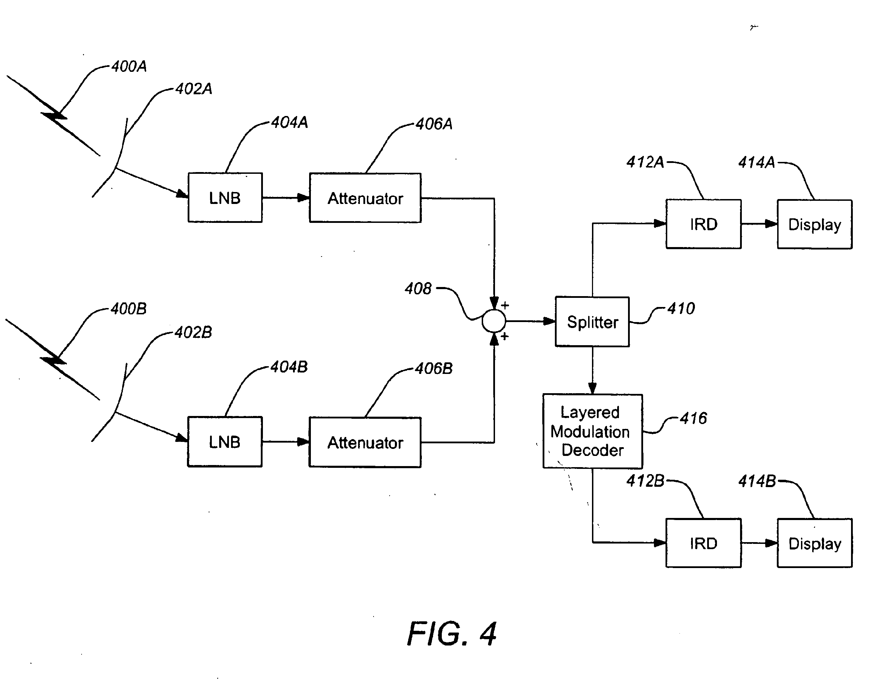

FIG. 4 is a block diagram of a receiving architecture for demonstrating the invention method. Emulated layered signals 400A, 400B are received by receiving dishes 402A, 402B (which can alternately be combined in a single dish with a single LNB). The signals 400A, 400B can each be transmitted by distinct transmitters from a single or separate satellites, but they exist in interfering frequency bands, e.g. 12.5 GHz. The received layered signals 400A, 400B are then directed through respective low noise blocks (LNBs) 404A, 404B and attenuators 406A, 406B. The LNBs 404A, 404B convert each of the received layered signals 400A, 400B to an intermediate frequency range, e.g. 950-1450 MHz. The layered signals are combined at the summation block 408, with their relative power levels adjusted by the attenuators 406A, 406B.

It should be noted that the details regarding the reception of the layered signal up to the summation block 408 are not critical to the operation of the invention and shown only as one example. Many designs are possible. For example, as previously mentioned, the same receiver dish can be used for both layered signals 400A, 400B. The result of two acceptably interfering layered signals on the same input is the only requirement.

The combined layered signals 400A, 400B can then be split at splitter 410 to direct the layered signal to alternate legacy IRDs 412A, 412B. One of the legacy IRDs 412A demodulates and decodes the upper layer signal of the signals 400A, 400B and ignores the other as noise. The decoded upper layer signal is then delivered to a display 414A. The other legacy IRD 412B has the layered signals 400A, 400B preprocessed by a layered modulation decoder 416 such that the lower layer signal of the signals 400A, 400B is converted to a signal compatible with the other legacy IRD 412B (and the upper layer signal of the signals 400A, 400B is effectively filtered out). The converted lower layer signal is then demodulated and decoded by the other legacy IRD 412B and the result delivered to a display 414B. Of course, alternate architectures can employ a single display switched between signals from the separate IRDs 412A, 412B.

### 4. LAYERED MODULATION DECODER

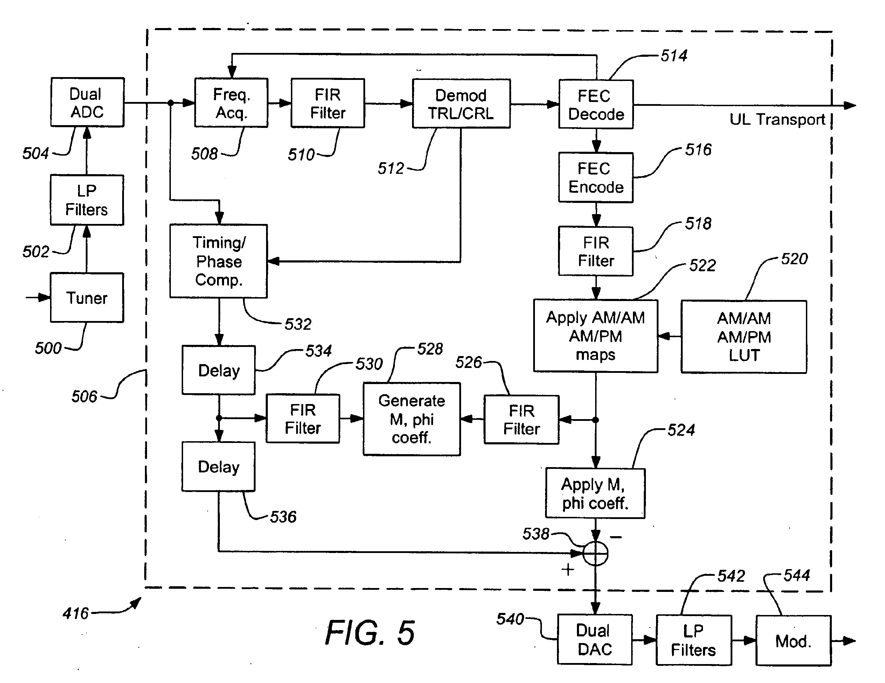

FIG. 5 is a block diagram of a layered modulation decoder 416 of the invention. The layered modulation decoder 416 preprocesses an incoming layered signal to extract a lower layer signal and convert it to a signal that is decodable by a legacy receiver, as previously discussed.

After the splitter 440, the incoming layered signal is upper tuned to convert it to a baseband in-phase (I) and quadrature (Q) signal by tuner 500. The separate signals can then be filtered by a low pass filter 502 in preparation for digitizing. The signals are then digitized at a high sampling rate and sufficient resolution by an analog-to-digital converter (ADC) 504. A dual channel ADC 504 or separate ADCs can be used for the separate in-phase and quadrature signals. The digitized signals are then communicated to a processor 506.

The processor 506 for extracting a lower layer signal can be implemented as a logic circuit. The entering digitized in-phase and quadrature signals can be first split into two paths that will become the upper layer and composite layered signals. On the signal path for the upper layer, the in-phase and quadrature signals can first be passed through a frequency acquisition loop 508. The can then be filtered through a finite impulse response (FIR) matched filter 510. A demodulator 512 demodulates the signals, using carrier and timing recovery loops to produce demodulated layered in-phase and quadrature signals. The demodulated signals are then decoded by decoder 514 which can incorporate Viterbi decoding, deinterleaving and Reed-Solomon (RS) decoding functions as appropriate to accurately determine the upper layer symbols. The decoded upper layer symbols are then applied to an encoder 516 in order to produce an ideal upper layer signal (i.e. an upper layer signal transmitted without the noise and/or interference of the lower layer signal). The encoded signal emerges again as in-phase and quadrature signal components. A variety of signal processing techniques can be applied to these signals to produce the ideal upper layer.

The ideal upper layer signal can be filtered through an FIR matched filter 518. Characteristics of the transmission (e.g. amplifier nonlinearities, etc.) can be accounted for by signal maps 520, such as an amplitude modulation to amplitude modulation (AM/AM) map and/or an amplitude modulation to phase modulation map (AM/PM). These signal maps 520 can be updated to account for changes in the transmission characteristics of the satellite. The signal maps 520 are applied 522 to the encoded signals to simulate downlink transmission of an upper layer signal. Similarly, an additional FIR matched filter 526 can also be applied after accounting for transmission characteristics 522. In addition, an upper layer amplitude and phase matching function 528, driven by the demodulated layered signal and the ideal reconstructed upper layer signal, can also be used to generate matching coefficients. The matching coefficients are applied 524 to the reconstructed upper layer signal to ensure that it is appropriately scaled in magnitude and rotated in phase as compared to the layered signal, for maximum cancellation in the final signal subtraction.

Ultimately, the ideal reconstructed in-phase and quadrature signals for the upper layer are subtracted from the layered in-phase and quadrature signals that are produced by the demodulator at a subtractor 538. A timing and phase compensation function 532 is applied to the second layered path entering the processor 506, using information from the demodulator 512. A fixed delay 534 can be applied to the second layered signal path to determine the appropriate delay to align the layered and ideal signals to generate matching coefficients 528. The delayed layered signal is split and in one path, an FIR matched filter 530 can be applied to it before generating matching coefficients 528. The second delayed layered signal path is delayed again 536 to align it appropriately with the ideal upper layer signal for subtraction 538. The results of the subtraction are the in-phase and quadrature signals of the lower layer.

The in-phase and quadrature signals of the lower layer, output from the subtractor 538, are first converted to analog signals in an digital-to-analog converter (DAC) 540. The DAC essentially reverses the prior digitizing and therefore may use the same sampling rate and resolution. Following this, the analog form signals can be filtered by a low pass filter 542 and passed to a modulator 544 (e.g. a QPSK modulator) to produce the lower layer signal in a format for a legacy receiver to decode, as the output of the processor 416.

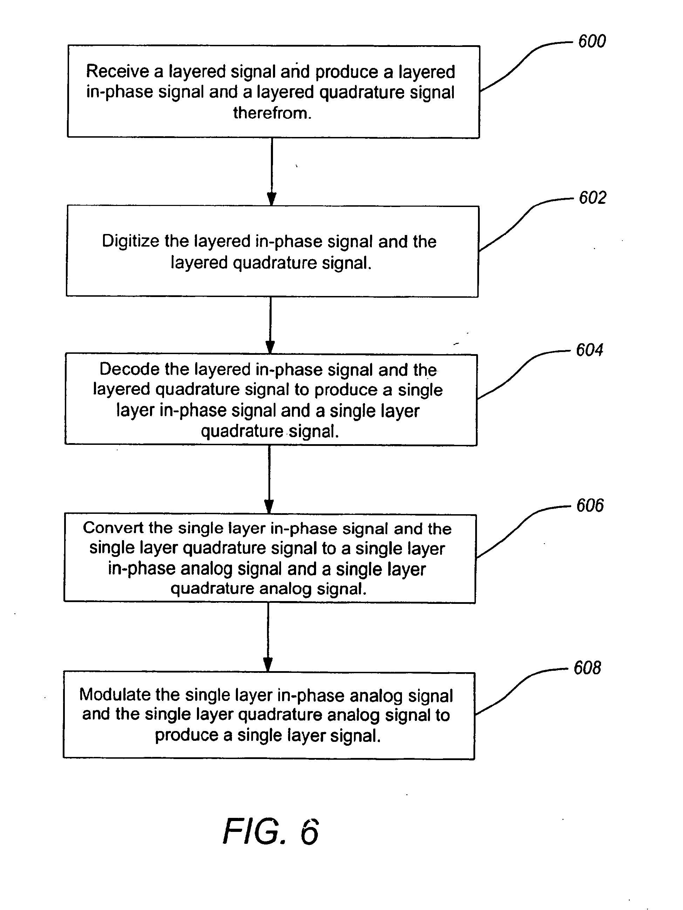

FIG. 6 describes a method of a layered modulation decoding according to the invention. A layered signal is received a layered in-phase signal and a layered quadrature signal are produced from it at block 600. Next, the layered in-phase signal and the layered quadrature signal are digitized at block 602. At block 604, the layered in-phase signal and the layered quadrature signal are decoded to produce a single layer in-phase signal and a single layer quadrature signal. Then at block 606, the single layer in-phase signal and the single layer quadrature signal are converted to a single layer in-phase analog signal and a single layer quadrature analog signal. Finally, at block 608 the single layer in-phase analog signal and the single layer quadrature analog signal are modulated to produce a single layer signal.

### CONCLUSION

The foregoing description including the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto. The above specification, examples and data provide a complete description of the manufacture and use of the invention. Since many embodiments of the invention can be made without departing from the scope of the invention, the invention resides in the claims hereinafter appended.

## Claims

1. An apparatus for receiving a non-coherent layered modulation signal comprised of a sum of a upper layer signal and a lower layer signal, the apparatus comprising:
a tuner (500) for receiving the layered modulation signal and producing a layered in-phase signal and a layered quadrature signal;
an analog-to-digital converter (504) for digitising the layered in-phase signal and the layered quadrature signal; and
a processor (506) for decoding the digitised layered in-phase signal and the digitised layered quadrature signal to produce a lower layer in-phase signal and a lower layer quadrature signal, an upper layer in-phase signal and an upper layer quadrature signal, said processor (506) comprising:
a modulation map (522) configured to modify the upper layer in-phase signal and the upper layer quadrature signal to account for transmission distortions of the layered modulation signal to produce a modified upper layer in-phase signal and a modified upper layer quadrature signal, and
a subtractor (538) configured to subtract an ideal upper layer in-phase signal from the digitised layered in-phase signal to produce said lower layer in-phase signal and to subtract an ideal upper layer quadrature signal from the digitised layered quadrature signal to produce said lower layer quadrature signal;
**characterized in that**
said processor (506) further comprising:
an amplitude and phase matching coefficient generator (528), configured to generate amplitude and phase matching coefficients from the digitised layered in-phase signal, the digitised layered quadrature signal, the modified upper layer in-phase signal and the modified upper layer quadrature signal, and
an amplitude and phase matcher (524) configured to apply the amplitude and phase matching coefficients to the modified upper layer in-phase signal and the modified upper layer quadrature signal to generate said ideal upper layer in-phase signal and said ideal upper layer quadrature signal;
said apparatus further comprising:
a digital-to-analog converter (540) for converting the lower layer in-phase signal and the lower layer quadrature signal to a lower layer in-phase analog signal and a lower layer quadrature analog signal; and
a modulator (544) for modulating the lower layer in-phase analog signal and the lower layer quadrature analog signal to produce a single layer signal.

2. The apparatus of claim 1, wherein the processor is adapted to decode the layered in-phase signal and the layered quadrature signal by match filtering (510) the layered in-phase signal and the layered quadrature signal.

3. The apparatus of claim 1, the processor is further configured to delay the digitised layered in-phase signal and the digitised layered quadrature signal to synchronize the subtraction of the ideal upper layer in-phase signal from the layered in-phase signal and the subtraction of the ideal upper layer quadrature signal from the layered quadrature signal.

4. The apparatus of claim 3, wherein said processor (506) further comprises:
a first delay element (534) configured to apply a first delay to the digitised layered in-phase signal and the digitised layered quadrature signal;
wherein said amplitude and phase matching coefficient generator (528) is configured to generate the amplitude and phase matching coefficients from the digitised and first delayed layered in-phase signal, the digitised and first delayed quadrature signal, the modified upper layer in-phase signal and the modified upper layer quadrature signal; and
a second delay element (536), configured to apply a second delay to the digitised and first delayed layered in-phase signal and the digitised and first delayed layered quadrature signal to produce the delayed digitised layered in-phase signal and the delayed digitised layered quadrature signal.

5. The apparatus of claim 1, wherein the single layer signal is a legacy signal.

6. A method of receiving a non-coherent layered modulation signal comprised of a sum of a upper layer signal and a lower layer signal, the method comprising the steps of:
receiving (600) the layered modulation signal and producing a layered in-phase signal and a layered quadrature signal;
digitising (602) the layered in-phase signal and the layered quadrature signal; and
decoding (604) the layered in-phase signal and the layered quadrature signal to produce a lower layer in-phase signal, a lower layer quadrature signal, an upper layer in-phase signal and an upper layer quadrature signal, comprising the steps of:
modifying the upper layer in-phase signal and the upper layer quadrature signal to account for transmission distortions of the layered modulation signal to produce a modified upper layer in-phase signal and a modified upper layer quadrature signal, and
subtracting an ideal upper layer in-phase signal from the digitised layered in-phase signal to produce the lower layer in-phase signal, and subtracting an ideal upper layer quadrature signal from the digitised layered quadrature signal to produce the lower layer quadrature signal;
**characterized in that**
said decoding (604) the layered in-phase signal and the layered quadrature signal further comprising the steps of:
generating amplitude and phase matching coefficients from the digitised layered in-phase signal, the digitised layered quadrature signal, the modified upper layer in-phase signal and the modified upper layer quadrature signal, and
applying the amplitude and phase matching coefficients to the modified upper layer in-phase signal and the modified upper layer quadrature signal to generate said ideal upper layer in-phase signal and said ideal upper layer quadrature signal;
said method of receiving a non-coherent layered modulation signal further comprising the steps of:
converting (606) the lower layer in-phase signal and the lower layer quadrature signal to a lower layer in-phase analog signal and a lower layer quadrature analog signal; and
modulating (608) the lower layer in-phase analog signal and the lower layer quadrature analog signal to produce a single layer signal.

7. The method of Claim 6, wherein the step of decoding further comprises delaying the digitised layered in-phase signal and the digitised layered quadrature signal to synchronize the subtraction of the ideal upper layer in-phase signal from the layered in-phase signal and the subtraction of the ideal upper layer quadrature signal from the layered quadrature signal.

8. The method of claim 7, wherein the step of delaying the digitised layered in-phase signal and the digitised layered quadrature signal comprises the steps of:
applying a first delay to the digitised layered in-phase signal and the digitised layered quadrature signal;
wherein the amplitude and phase matching coefficients are generated from the digitised and first delayed layered in-phase signal, the digitised and first delayed quadrature signal, the modified upper layer in-phase signal and the modified upper layer quadrature signal; and
applying a second delay to the digitised and first delayed layered in-phase signal and the digitised and first delayed layered quadrature signal to produce the delayed digitised layered in-phase signal and the delayed digitised layered quadrature signal.

9. The method of claim 6, wherein the single layer signal is a legacy signal.

## Patentansprüche

1. Vorrichtung zum Empfangen eines nichtkohärenten aus Schichten bestehenden Modulationssignals (layered modulation signal), das aus einer Summe eines Signals der oberen Schicht und eines Signals der unteren Schicht besteht, wobei die Vorrichtung umfasst:
einen Tuner (500) zum Empfangen des aus Schichten bestehenden Modulationssignals und zum Erzeugen eines aus Schichten bestehenden gleichphasigen Signals (layered in-phase signal) sowie eines aus Schichten bestehenden, um 90° phasenverschobenen Signals (layered quadrature signal);
einen Analog-Digital-Wandler (504) zum Digitalisieren des aus Schichten bestehenden gleichphasigen Signals und des aus Schichten bestehenden, um 90° phasenverschobenen Signals; und
einen Prozessor (506) zum Decodieren des digitalisierten aus Schichten bestehenden gleichphasigen Signals und des digitalisierten aus Schichten bestehenden, um 90° phasenverschobenen Signals, um ein gleichphasiges Signal der unteren Schicht und ein um 90° phasenverschobenes Signal der unteren Schicht, ein gleichphasiges Signal der oberen Schicht und ein um 90° phasenverschobenes Signal der oberen Schicht zu erzeugen, wobei der Prozessor (506) umfasst:
ein Modulations-Kennfeld (522), das so konfiguriert ist, dass es das gleichphasige Signal der oberen Schicht und das um 90° phasenverschobene Signal der oberen Schicht modifiziert, um Übertragungsverzerrungen des aus Schichten bestehenden Modulationssignals zu berücksichtigen und ein modifiziertes gleichphasiges Signal der oberen Schicht sowie ein modifiziertes, um 90° phasenverschobenes Signal der oberen Schicht zu erzeugen, und
ein Subtrahierglied (538), das so konfiguriert ist, dass es ein ideales gleichphasiges Signal der oberen Schicht von dem digitalisierten aus Schichten bestehenden gleichphasigen Signal subtrahiert, um das gleichphasige Signal der unteren Schicht zu erzeugen, und ein ideales, um 90° phasenverschobenes Signal der oberen Schicht von dem digitalisierten aus Schichten bestehenden, um 90° phasenverschobenen Signal subtrahiert, um das um 90° phasenverschobene Signal der unteren Schicht zu erzeugen;
**dadurch gekennzeichnet, dass**
der Prozessor (506) des Weiteren umfasst:
eine Einrichtung (528) zum Generieren von Amplituden- und Phasenanpassungskoeffizienten, die so konfiguriert ist, dass sie Amplituden- und Phasenanpassungskoeffizienten aus dem digitalisierten aus Schichten bestehenden gleichphasigen Signals, dem digitalisierten aus Schichten bestehenden, um 90° phasenverschobenes Signal, dem modifizierten gleichphasigen Signal der oberen Schicht und dem modifizierten, um 90° phasenverschobenen Signal der oberen Schicht generiert, und
eine Amplituden-und-Phasen-Anpassungseinrichtung (524), die so konfiguriert ist, dass sie die Amplituden- und Phasenanpassungskoeffizienten auf das modifizierte gleichphasige Signal der oberen Schicht und das modifizierte, um 90° phasenverschobene Signal der oberen Schicht anwendet, um das ideale gleichphasige Signal der oberen Schicht und das ideale, um 90° phasenverschobene Signal der oberen Schicht zu generieren;
wobei die Vorrichtung des Weiteren umfasst:
einen Digital-Analog-Wandler (540) zum Umwandeln des gleichphasigen Signals der unteren Schicht und des um 90° verschobenen Signals der unteren Schicht in ein gleichphasiges analoges Signal der unteren Schicht und ein um 90° phasenverschobenes analoges Signal der unteren Schicht; und
einen Modulator (544) zum Modulieren des gleichphasigen analogen Signals der unteren Schicht und des um 90° phasenverschobenen analogen Signals der unteren Schicht, um ein aus einer Schicht bestehendes Signal zu erzeugen.

2. Vorrichtung nach Anspruch 1, wobei der Prozessor so eingerichtet ist, dass er das aus Schichten bestehende, gleichphasige Signal und das aus Schichten bestehende, um 90° phasenverschobene Signal durch Anpassungsfiltem (510) des aus Schichten bestehenden gleichphasigen Signals und des aus Schichten bestehenden, um 90° phasenverschobenen Signals decodiert.

3. Vorrichtung nach Anspruch 1, wobei der Prozessor des Weiteren so konfiguriert ist, dass er das digitalisierte aus Schichten bestehende gleichphasige Signal und das digitalisierte aus Schichten bestehende, um 90° phasenverschobene Signal verzögert, um die Subtraktion des idealen gleichphasigen Signals der oberen Schicht von dem aus Schichten bestehenden gleichphasigen Signal und die Subtraktion des idealen, um 90° phasenverschobenen Signals der oberen Schicht von dem aus Schichten bestehenden, um 90° phasenverschobenen Signals zu synchronisieren.

4. Vorrichtung nach Anspruch 3, wobei der Prozessor (506) des Weiteren umfasst:
ein erstes Verzögerungselement (534), das so konfiguriert ist, dass es eine erste Verzögerung auf das digitalisierte aus Schichten bestehende gleichphasige Signal und das digitalisierte aus Schichten bestehende, um 90° phasenverschobene Signal anwendet;
wobei die Einrichtung (528) zum Erzeugen von Amplituden- und Phasenanpassungskoeffizienten so konfiguriert ist, dass sie die Amplituden- und Phasenanpassungskoeffizienten aus dem digitalisierten und zuerst verzögerten, aus Schichten bestehenden gleichphasigen Signal, dem digitalisierten und zuerst verzögerten, um 90° phasenverschobenen Signal, dem modifizierten gleichphasigen Signal der oberen Schicht und dem modifizierten, um 90° phasenverschobenen Signal der oberen Schicht generiert; und
ein zweites Verzögerungselement (536), das so konfiguriert ist, dass es eine zweite Verzögerung auf das digitalisierte und zuerst verzögerte, aus Schichten bestehende, gleichphasige Signal und das digitalisierte und zuerst verzögerte, aus Schichten bestehende, um 90° phasenverschobene Signal anwendet, um das verzögerte digitalisierte aus Schichten bestehende gleichphasige Signal und das verzögerte digitalisierte, aus Schichten bestehende, um 90° phasenverschobene Signal zu erzeugen.

5. Vorrichtung nach Anspruch 1, wobei das aus einer Schicht bestehende Signal ein Stammsignal (legacy signal) ist.

6. Verfahren zum Empfangen eines nichtkohärenten, aus Schichten bestehenden Modulationssignals (layered modulation signal), das aus einer Summe des Signals einer oberen Schicht und des Signals einer unteren Schicht besteht, wobei das Verfahren die folgenden Schritte umfasst:
Empfangen (600) des aus Schichten bestehenden Modulationssignals und Erzeugen eines aus Schichten bestehenden gleichphasigen Signals (layered in-phase signal) und eines aus Schichten bestehenden, um 90° phasenverschobenen Signals (layered quadrature signal);
Digitalisieren (602) des aus Schichten bestehenden gleichphasigen Signals und des aus Schichten bestehenden, um 90° phasenverschobenen Signals; und
Decodieren (604) des aus Schichten bestehenden gleichphasigen Signals und des aus Schichten bestehenden, um 90° phasenverschobenen Signals, um ein gleichphasiges Signal der unteren Schicht, ein um 90° phasenverschobenes Signal der unteren Schicht, ein gleichphasiges Signal der oberen Schicht und ein um 90° phasenverschobenes Signal der oberen Schicht zu erzeugen, wobei es die folgenden Schritte umfasst:
Modifizieren des gleichphasigen Signals der oberen Schicht und des um 90° phasenverschobenen Signals der oberen Schicht, um Übertragungsverzerrungen des aus Schichten bestehenden Modulationssignals zu berücksichtigen und ein modifiziertes gleichphasiges Signal der oberen Schicht sowie ein modifiziertes, um 90° phasenverschobenes Signal der oberen Schicht zu erzeugen, und
Subtrahieren eines idealen gleichphasigen Signals der oberen Schicht von dem digitalisierten aus Schichten bestehenden gleichphasigen Signal, um das gleichphasige Signal der unteren Schicht zu erzeugen, und
Subtrahieren eines idealen, um 90° phasenverschobenen Signals der oberen Schicht von dem digitalisierten aus Schichten bestehenden, um 90° phasenverschobenen Signal, um das um 90° phasenverschobene Signal der unteren Schicht zu erzeugen;
**dadurch gekennzeichnet, dass**
das Decodieren (604) des aus Schichten bestehenden gleichphasigen Signals und des aus Schichten bestehenden, um 90° phasenverschobenen Signals des Weiteren die folgenden Schritte umfasst:
Generieren von Amplituden- und Phasenanpassungskoeffizienten aus dem digitalisierten geschichteten gleichphasigen Signal, dem digitalisierten geschichteten, um 90° phasenverschobenen Signal, dem modifizierten gleichphasigen Signal der oberen Schicht und dem modifizierten, um 90° phasenverschobenen Signal der oberen Schicht, und
Anwenden der Amplituden- und Phasenanpassungskoeffizienten auf das modifizierte gleichphasige Signal der oberen Schicht und das modifizierte, um 90° phasenverschobene Signal der oberen Schicht, um das ideale gleichphasige Signal der oberen Schicht und das ideale, um 90° phasenverschobene Signal der oberen Schicht zu generieren; und
das Verfahren zum Empfangen eines nichtkohärenten geschichteten Modulationssignals des Weiteren die folgenden Schritte umfasst:
Umwandeln (606) des gleichphasigen Signals der unteren Schicht und des um 90° phasenverschobenen Signals der unteren Schicht in ein gleichphasiges analoges Signal der unteren Schicht und ein um 90° phasenverschobenes analoges Signal der unteren Schicht; und
Modulieren (608) des gleichphasigen analogen Signals der unteren Schicht und des um 90° phasenverschobenen analogen Signals der unteren Schicht, um ein einschichtiges Signal zu erzeugen.

7. Verfahren nach Anspruch 6, wobei der Schritt des Decodierens des Weiteren Verzögern des digitalisierten aus Schichten bestehenden gleichphasigen Signals und des digitalisierten aus Schichten bestehenden, um 90° phasenverschobenen Signals umfasst, um die Subtraktion des idealen gleichphasigen Signals der oberen Schicht von dem aus Schichten bestehenden gleichphasigen Signal und die Subtraktion des idealen, um 90° phasenverschobenen Signals der oberen Schicht von dem aus Schichten bestehenden, um 90° phasenverschobenen Signal zu synchronisieren.

8. Verfahren nach Anspruch 7, wobei der Schritt des Verzögerns des digitalisierten aus Schichten bestehenden gleichphasigen Signals und des digitalisierten aus Schichten bestehenden, um 90° phasenverschobenen Signals die folgenden Schritte umfasst:
Anwenden einer ersten Verzögerung auf das digitalisierte aus Schichten bestehende gleichphasige Signal und das digitalisierte aus Schichten bestehende, um 90° phasenverschobene Signal;
wobei die Amplituden- und Phasenanpassungskoeffizienten aus dem digitalisierten und zuerst verzögerten aus Schichten bestehenden gleichphasigen Signal, dem digitalisierten und zuerst verzögerten, um 90° phasenverschobenen Signal, dem modifizierten gleichphasigen Signal der oberen Schicht und dem modifizierten, um 90° phasenverschobenen Signal der oberen Schicht generiert werden; und
Anwenden einer zweiten Verzögerung auf das digitalisierte und zuerst verzögerte aus Schichten bestehende gleichphasige Signal und das digitalisierte und zuerst verzögerte aus Schichten bestehende, um 90° phasenverschobene Signal, um das verzögerte digitalisierte aus Schichten bestehende gleichphasige Signal und das verzögerte digitalisierte aus Schichten bestehende, um 90° phasenverschobene Signal zu erzeugen.

9. Verfahren nach Anspruch 6, wobei das aus einer Schicht bestehende Signal ein Stammsignal (legacy signal) ist.

## Revendications

1. Dispositif pour recevoir un signal de modulation en couches non cohérent constitué par une somme d'un signal de couche supérieure et d'un signal de couche inférieure, le dispositif comprenant:
un syntoniseur (500) pour recevoir le signal de modulation en couches et produire un signal en couches en phase et un signal en couches en quadrature ;
un convertisseur analogique-numérique (504) pour numériser le signal en couches en phase et le signal en couches en quadrature ; et
un processeur (506) pour décoder le signal en couches en phase numérisé et le signal en couches en quadrature numérisé pour produire un signal en phase de couche inférieure et un signal en quadrature de couche inférieure, un signal en phase de couche supérieure et un signal en quadrature de couche supérieure, ledit processeur (506) comprenant:
une table de modulation (522) configurée pour modifier le signal en phase de couche supérieure et le signal en quadrature de couche supérieure pour tenir compte de distorsions de transmission du signal de modulation en couches pour produire un signal en phase de couche supérieure modifié et un signal en quadrature de couche supérieure modifié, et
un soustracteur (538) configuré pour soustraire un signal en phase de couche supérieure idéal du signal en couches en phase numérisé pour produire ledit signal en phase de couche inférieure et pour soustraire un signal en quadrature de couche supérieure idéal du signal en couches en quadrature numérisé pour produire ledit signal en quadrature de couche inférieure ;
**caractérisé en ce que** :
ledit processeur (506) comprend en outre :
un générateur de coefficients d'adaptation d'amplitude et de phase (528), configuré pour générer des coefficients d'adaptation d'amplitude et de phase à partir du signal en couches en phase numérisé, du signal en couches en quadrature numérisé, du signal en phase de couche supérieure modifié et du signal en quadrature de couche supérieure modifié, et
un adaptateur d'amplitude et de phase (524) configuré pour appliquer les coefficients d'adaptation d'amplitude et de phase au signal en phase de couche supérieure modifié et au signal en quadrature de couche supérieure modifié pour générer ledit signal en phase de couche supérieure idéal et ledit signal en quadrature de couche supérieure idéal ;
ledit dispositif comprenant en outre:
un convertisseur numérique-analogique (540) pour convertir le signal en phase de couche inférieure et le signal en quadrature de couche inférieure en un signal analogique en phase de couche inférieure et un signal analogique en quadrature de couche inférieure ; et
un modulateur (544) pour moduler le signal analogique en phase de couche inférieure et le signal analogique en quadrature de couche inférieure pour produire un signal à couche unique.

2. Dispositif selon la revendication 1, dans lequel le processeur est adapté pour décoder le signal en couches en phase et le signal en couches en quadrature par filtrage d'adaptation (510) du signal en couches en phase et du signal en couches en quadrature.

3. Dispositif selon la revendication 1, le processeur est configuré en outre pour retarder le signal en couches en phase numérisé et le signal en couches en quadrature numérisé pour synchroniser la soustraction du signal en phase de couche supérieure idéal du signal en couches en phase et la soustraction du signal en quadrature de couche supérieure idéal du signal en couches en quadrature.

4. Dispositif selon la revendication 3, dans lequel le processeur (506) comprend en outre :
un premier élément de retard (534) configuré pour appliquer un premier retard au signal en couches en phase numérisé et au signal en couches en quadrature numérisé ;
dans lequel ledit générateur de coefficients d'adaptation d'amplitude et de phase (528) est configuré pour générer les coefficients d'adaptation d'amplitude et de phase à partir du signal en couches en phase numérisé et premièrement retardé, du signal en couches en quadrature numérisé et premièrement retardé, du signal en phase de couche supérieure modifié et du signal en quadrature de couche supérieure modifié ; et
un deuxième élément de retard (536) configuré pour appliquer un deuxième retard au signal en couches en phase numérisé et premièrement retardé et au signal en couches en quadrature numérisé et premièrement retardé pour produire le signal en couches en phase numérisé retardé et le signal en couches en quadrature numérisé retardé.

5. Dispositif selon la revendication 1, dans lequel le signal à couche unique est un signal existant.

6. Procédé pour recevoir un signal de modulation en couches non cohérent constitué par une somme d'un signal de couche supérieure et d'un signal de couche inférieure, le procédé comprenant les étapes consistant à :
recevoir (600) le signal de modulation en couches et produire un signal en couches en phase et un signal en couches en quadrature ;
numériser (602) le signal en couches en phase et le signal en couches en quadrature ; et
décoder (604) le signal en couches en phase et le signal en couches en quadrature pour produire un signal en phase de couche inférieure, un signal en quadrature de couche inférieure, un signal en phase de couche supérieure et un signal en quadrature de couche supérieure, comprenant les étapes consistant à :
modifier le signal en phase de couche supérieure et le signal en quadrature de couche supérieure pour tenir compte de distorsions de transmission du signal de modulation en couches pour produire un signal en phase de couche supérieure modifié et un signal en quadrature de couche supérieure modifié, et
soustraire un signal en phase de couche supérieure idéal du signal en couches en phase numérisé pour produire le signal en phase de couche inférieure et soustraire un signal en quadrature de couche supérieure idéal du signal en couches en quadrature numérisé pour produire le signal en quadrature de couche inférieure;
**caractérisé en ce que**:
ledit décodage (604) du signal en couches en phase et du signal en couches en quadrature comprend en outre les étapes consistant à :
générer des coefficients d'adaptation d'amplitude et de phase à partir du signal en couches en phase numérisé, du signal en couches en quadrature numérisé, du signal en phase de couche supérieure modifié et du signal en quadrature de couche supérieure modifié, et
appliquer les coefficients d'adaptation d'amplitude et de phase au signal en phase de couche supérieure modifié et au signal en quadrature de couche supérieure modifié pour générer ledit signal en phase de couche supérieure idéal et ledit signal en quadrature de couche supérieure idéal ;
ledit procédé pour recevoir un signal de modulation en couches non cohérent comprenant en outre les étapes consistant à :
convertir (606) le signal en phase de couche inférieure et le signal en quadrature de couche inférieure en un signal analogique en phase de couche inférieure et un signal analogique en quadrature de couche inférieure ; et
moduler (608) le signal analogique en phase de couche inférieure et le signal analogique en quadrature de couche inférieure pour produire un signal à couche unique.

7. Procédé selon la revendication 6, dans lequel l'étape de décodage consiste en outre à retarder le signal en couches en phase numérisé et le signal en couches en quadrature numérisé pour synchroniser la soustraction du signal en phase de couche supérieure idéal du signal en couches en phase et la soustraction du signal en quadrature de couche supérieure idéal du signal en couches en quadrature.

8. Procédé selon la revendication 7, dans lequel l'étape consistant à retarder le signal en couches en phase numérisé et le signal en couches en quadrature numérisé comprend les étapes consistant à :
appliquer un premier retard au signal en couches en phase numérisé et au signal en couches en quadrature numérisé ;
dans lequel lesdits coefficients d'adaptation d'amplitude et de phase sont générés à partir du signal en couches en phase numérisé et premièrement retardé et du signal en couches en quadrature numérisé et premièrement retardé, du signal en phase de couche supérieure modifié et du signal en quadrature de couche supérieure modifié ; et
appliquer un deuxième retard au signal en couches en phase numérisé et premièrement retardé et au signal en couches en quadrature numérisé et premièrement retardé pour produire le signal en couches en phase numérisé retardé et le signal en couches en quadrature numérisé retardé.

9. Procédé selon la revendication 6, dans lequel le signal à couche unique est un signal existant.
